# EUROPÄISCHE PATENTSCHRIFT

(11) **EP 1 073 509 B1**
(45) Veröffentlichungstag und Bekanntmachung des Hinweises auf die Patenterteilung: **31.03.2004**
(21) Anmeldenummer: 99939759.9
(22) Anmeldetag: 12.04.1999
(51) Int. Cl.: B01D 53/90, B01D 53/94

(54) **VERFAHREN UND VORRICHTUNG ZUR KATALYTISCHEN REDUZIERUNG VON STICKOXIDEN IM ABGAS EINER VERBRENNUNGSANLAGE**
METHOD AND DEVICE FOR CATALYTIC REDUCTION OF NITROGEN OXIDES IN THE WASTE GAS OF A COMBUSTION FACILITY
PROCEDE ET DISPOSITIF DE REDUCTION CATALYTIQUE D'OXYDES D'AZOTE CONTENUS DANS LES GAZ D'ECHAPPEMENT D'UN SYSTEME A COMBUSTION INTERNE

(30) Priorität: 24.04.1998 DE 19818448
(43) Veröffentlichungstag der Anmeldung: 07.02.2001
(73) Patentinhaber: Argillon GmbH, 96257 Redwitz (DE)
(72) Erfinder: WISSLER, Gerhard, D-93104 Sünching (DE); PAJONK, Günther, D-96199 Zapfendorf (DE); WEIGL, Manfred, D-93161 Viehhausen (DE); HOFMANN, Lothar, D-96264 Altenkunstadt (DE)
(74) Vertreter: Tergau & Pohl Patentanwälte
(86) Internationale Anmeldenummer: PCT/DE1999/001097
(87) Internationale Veröffentlichungsnummer: WO 1999/055445

(56) Entgegenhaltungen:
- EP-A- 0 898 061
- WO-A-99/30810
- DE-A- 4 432 577
- DE-A- 19 536 571

## Beschreibung

Die Erfindung betrifft ein Verfahren und eine Vorrichtung zur katalytischen Umsetzung von Stickoxiden im Abgas einer Verbrennungsanlage, insbesondere im Abgas eines mit Luftüberschuß betriebenen Verbrennungsmotors, beispielsweise eines Dieselmotors.

Bei der Verbrennung von fossilem Brennstoff wie Erdöl oder Kohle in einer Verbrennungsanlage, insbesondere von Dieselkraftstoff in einem Dieselmotor, entstehen unter anderem für die Umwelt schädliche Stickoxide. Um den Eintrag von Stickoxiden in die Umwelt zu vermindern, ist unter anderem bei der Kraftwerkstechnik der Einsatz eines in der Abgasleitung einer Verbrennungsanlage angeordneten Katalysators bekannt. Der Katalysator dient zur katalytischen Umwandlung der im Abgas enthaltenen Stickoxide in unbedenkliche Stoffe.

Bei einem mit Luftüberschuß betriebenen Verbrennungsmotor werden Stickoxide beispielsweise nach dem Verfahren der selektiven katalytischen Reduktion (SCR-Verfahren) aus dem Abgas entfernt. Dabei wird in das Abgas vor dem Durchströmen eines sogenannten SCR- oder DeNOx-Katalysators ein Reduktionsmittel eingebracht, das die im Abgas enthaltenen Stickoxide in Anwesenheit von Sauerstoff am Katalysator zu unschädlichem Stickstoff und Wasser umsetzt. Als Reduktionsmittel wird dabei in der Regel Ammoniak verwendet. Das Reduktionsmittel wird in das Abgas beispielsweise in Form einer Reduktionsmittellösung eingebracht, aus welcher das eigentliche Reduktionsmittel freigesetzt wird. Im Falle von Ammoniak ist eine solche Reduktionsmittellösung beispielsweise eine wäßrige Harnstofflösung. Siehe hierzu die Siemens-Firmenschrift: "SINOx, Stickoxidminderung für stationäre Dieselmotoren", 1997, Best.-Nr. A96001-U91-A232.

Bei der Stickoxidminderung nach dem SCR-Verfahren muß stets eine an die aktuelle Stickoxidemission angepaßte Reduktionsmittelmenge in das Abgas eingebracht werden. Damit wird einerseits eine hohe Umsatzrate der Stickoxide am Katalysator erzielt, und andererseits wird vermieden, daß zuviel Reduktionsmittel eingebracht wird, welches dann den Katalysator zusammen mit dem Abgas verläßt und in die Umwelt gelangt. Der Austritt von Reduktionsmittel in die Umwelt wird auch als Schlupf bezeichnet. Er ist insbesondere bei Verwendung von Ammoniak zu vermeiden, um eine zusätzliche Belastung der Umwelt zu verhindern.

Die Ermittlung der pro Zeiteinheit einzubringenden Menge an Reduktionsmittel gestaltet sich insbesondere bei instationär betriebenen Verbrennungsanlagen schwierig. Solche instationär betriebene Verbrennungsanlagen sind beispielsweise im Kraftfahrzeugbereich eingesetzte Dieselmotoren, die mit häufigen Lastwechseln betrieben werden. Die Emission der Stickoxide kann daher innerhalb kurzer Zeitintervalle beträchtlich variieren. In Folge dessen ist es notwendig, daß auch die zudosierte Menge an Reduktionsmittel sehr schnell variiert und genau eingestellt wird. Die Menge des einzubringenden Reduktionsmittels ist also bedarfsabhängig zu steuern. Der aktuelle Bedarf wird dabei anhand von Parametern ermittelt, die den Betriebszustand der Verbrennungsanlage charakterisieren. Bei einem Dieselmotor sind solche Parameter beispielsweise Drehzahl, Drehmoment, Betriebstemperatur oder Kraftstoffverbrauch. Aus der DE-19 536 571 A1 ist es bekannt, zusätzlich Parameter hinzuzuziehen, die den Betriebszustand des Katalysators charakterisieren. Diese Parameter sind beispielsweise die Speicherkapazität des Katalysators für das Reduktionsmittel, die Betriebstemperatur oder die katalytische Aktivität des Katalysators.

Aus den verschiedenen Parametern wird beispielsweise anhand eines Kennfelds die für die Umsetzung der Stickoxide benötigte Menge an Reduktionsmittel ermittelt. Für die Bestimmung des pro Zeiteinheit zuzudosierenden Volumens der Reduktionsmittellösung sind bei der Verwendung einer Reduktionsmittellösung zudem deren Eigenschaften, beispielsweise deren Konzentration, mit zu berücksichtigen. In der Regel wird die Menge an Reduktionsmittel so bestimmt, daß dem Katalysator etwas weniger Reduktionsmittel zugeführt wird, als zur Umsetzung der Stickoxide notwendig ist, so daß Schlupf auf alle Fälle vermieden ist. Der Katalysator wird also unterhalb der theoretisch möglichen Umsatzrate betrieben. Die Umsatzrate gibt den Anteil der am Katalysator reduzierten Stickoxide an.

Um eine hohe Dosiergenauigkeit zu erhalten, ist beispielsweise aus der nachveröffentlichten WO 99/30810 die Messung der Konzentration der Reduktionsmittellösung vorgesehen. Damit sollen auch die Konzentration beeinflussende Faktoren, wie beispielsweise Dichteschwankungen bei Temperaturänderungen, Verdunstung und Verunreinigung der Reduktionsmittellösung berücksichtigt und ausgeglichen werden.

Weiterhin ist gemäß der ebenfalls nachveröffentlichten EP 0 8 98 061 A2 vorgesehen, die Temperatur des Reduktionsmittels mit einem Sensor zu erfassen und hieraus einen Rückschluss auf dessen Dichte zu ziehen. In Abhängigkeit des Ergebnisses wird eine Korrektur der ins Abgas einzudosierenden Reduktionsmittelmenge vorgenommen.

Aus der DE 44 32 577 A1 ist ein zur Vermeidung von Frostschäden ausgebildetes Dosiersystem zu entnehmen, das u.a. eine Thermostatisierung einer in einem Vorratsbehälter befindlichen Reduktionsmittellösung ermöglicht. Durch die Thermostatisierung wird eine Steigerung der Dosiergenauigkeit einer volumetrisch arbeitenden Dosiereinrichtung erzielt.

Der Erfindung liegt die Aufgabe zugrunde, ein Verfahren und eine Vorrichtung zur katalytischen Umsetzung von im Abgas einer Verbrennungsanlage enthaltenen Stickoxiden anzugeben, wobei ein Schlupf des Reduktionsmittels sicher vermieden und gleichzeitig eine hohe Umsatzrate der Stickoxide am Katalysator erzielt wird.

Gemäß der Erfindung wird zur Lösung der Aufgabe bei dem Verfahren zur katalytischen Reduzierung von Stickoxiden, insbesondere von Stickoxiden im Abgas eines mit Luftüberschuß betriebenen Verbrennungsmotors, ein Katalysator von dem Abgas durchströmt, vor dem Durchströmen des Katalysators wird in das Abgas eine Reduktionsmittellösung zudosiert und die pro Zeiteinheit zu dosierende Menge des gelösten Reduktionsmittels wird bedarfsabhängig bestimmt. Die Reduktionsmittellösung wird temperiert und ihre Dichte wird somit auf einen festgelegten Wert eingestellt, da bei einer vorgegebenen Temperatur die Dichte definiert ist. Die eingestellte Dichte der Reduktionsmittellösung wird zur Bestimmung des pro Zeiteinheit zu dosierenden Volumens der Reduktionsmittellösung herangezogen.

Die Erfindung geht von der Überlegung aus, daß bei einer volumetrischen Dosierung der Reduktionsmittellösung die zudosierte Menge an Reduktionsmittel von der Dichte der Reduktionsmittellösung beeinflußt wird. Dichteschwankungen treten in erster Linie bei Temperaturänderungen auf. Mit der Einbeziehung der Dichte wird die durch Dichteschwankungen hervorgerufene Ungenauigkeit bei der Dosierung weitgehend verhindert und eine hohe Dosiergenauigkeit erreicht. Dadurch wird die gewünschte Umsatzrate möglichst genau erzielt, ohne daß Schlupf auftritt. Der Vorteil der vorgesehenen direkten Temperierung der Reduktionsmittellösung ist darin zu sehen, daß die Dichte der Reduktionsmittellösung nicht durch eine gesonderte Messung, beispielsweise einer Temperaturmessung, bestimmt werden muß.

Die Temperierung der Reduktionsmittellösung erfolgt dabei entweder im Vorratsbehälter für die Reduktionsmittellösung oder unmittelbar vor der Dosiereinrichtung. Die Anordnung einer Temperiereinrichtung unmittelbar vor der Dosiereinrichtung bietet den Vorteil, daß die eventuell auftretenden Wärmeverluste durch Abstrahlung zwischen Temperiereinrichtung und Dosiereinrichtung vernachlässigbar sind.

Als Reduktionsmittellösung wird vorzugsweise eine wäßrige Harnstofflösung verwendet. Die Harnstofflösung wird in das heiße Abgas eindosiert. Dabei wird aus dem gelösten Harnstoff das eigentliche Reduktionsmittel, nämlich der Ammoniak, freigesetzt. Das Ammoniak gelangt zusammen mit den Stickoxiden in den Katalysator, wo es an der katalytisch aktiven Fläche die Stickoxide zu Stickstoff reduziert.

Bevorzugt wird zur Bestimmung der Dichte zusätzlich die Temperatur der Reduktionsmittellösung gemessen und in Abhängigkeit von der aus der Temperatur abgeleiteten Dichte das zu dosierende Volumen der Reduktionsmittellösung gesteuert. Die Temperatur ist die wesentliche Bestimmungsgröße für die Dichte und kann in einfacher Weise durch gebräuchliche Temperatursensoren ermittelt werden. Da die Reduktionsmittellösung in flüssiger Form vorliegt und nahezu inkompressibel ist, ist die Dichte von Druckeinflüssen im wesentlichen unbeeinflußt. Durch die neben der Temperierung zusätzliche Messung der Temperatur wird eine höhere Genauigkeit bei der Kontrolle der Dichte und damit eine hohe Dosiergenauigkeit erzielt. Dies kann insbesondere bei der Inbetriebnahme von Vorteil sein, wenn die Temperiereinrichtung die Reduktionsmittellösung noch nicht auf die vorgegebene Temperatur eingestellt hat.

Die Temperaturmessung kann bereits in einem Vorratsbehälter für die Reduktionsmittellösung oder bevorzugt unmittelbar vor einer Dosiereinrichtung zur volumetrischen Dosierung der Reduktionsmittellösung erfolgen. Mit der Bestimmung der Temperatur unmittelbar vor der Dosiereinrichtung wird dabei eine höhere Genauigkeit erreicht, da die tatsächliche Temperatur der Reduktionsmittellösung am Ort der Dosiereinrichtung ermittelt wird. Bei einer Temperaturmessung im oder am Vorratsbehälter können demgegenüber unter Umständen in einer zu der Dosiereinrichtung führenden Zuleitung Wärmeverluste auftreten, die bei der Ermittlung der Dichte zu berücksichtigen sind.

Das zu dosierende Volumen wird vorteilhafter Weise aus einer Kennlinie bestimmt, die die Abhängigkeit zwischen der Temperatur und der Dichte der Reduktionsmittellösung wiedergibt.

Das zu dosierende Volumen kann dadurch in einfacher Weise aus der Kennlinie abgelesen werden, und braucht nicht permanent rechnerisch ermittelt werden. Es ist daher ausreichend, die Temperatur-Dichte-Abhängigkeit nur einmal entweder experimentell oder rechnerisch zu bestimmen. Es ist dabei von Vorteil, in einem Speicherelement mehrere Kennlinien für verschiedene Reduktionsmittellösungen abzulegen. Die Reduktionsmittellösungen können sich beispielsweise hinsichtlich ihrer Konzentration oder ihrer Zusammensetzung unterscheiden. In der Regel wird als Reduktionsmittel Harnstoff und als Lösungsmittel Wasser verwendet.

Die Temperierung erfolgt bevorzugt mittels einer Temperiereinrichtung oder Heizung, und zwar insbesondere mittels eines NTC-Heizelements. Das NTC-Heizelement ist ein elektrisches Widerstands-Heizelement und dadurch charakterisiert, daß sein Widerstand einen negativen Temperaturkoeffizient (NTC) aufweist, d.h. sein Widerstand und damit seine Heizleistung nehmen mit zunehmender Temperatur ab. Das NTC-Heizelement ist also nahezu selbstregulierend, so daß sich damit in besonders einfacher Weise eine gewünschte Temperatur in der Reduktionsmittellösung erreichen läßt, ohne daß eine aufwendige Steuerung der Heizung erforderlich ist.

Das NTC-Heizelement wird zweckmäßigerweise zugleich als Temperatursensor eingesetzt. Hierzu wird der Widerstand des NTC-Heizelements bestimmt, der eine eindeutige Funktion der Temperatur ist. Somit kann durch ein einziges Element zugleich die Reduktionsmittellösung auf eine vorgegebene Temperatur aufgeheizt und die momentane Temperatur der Reduktionsmittellösung unmittelbar bestimmt werden.

In einer bevorzugten Ausgestaltung wird die Konzentration der Reduktionsmittellösung zur Bestimmung des zu dosierenden Volumens herangezogen. Die Konzentration der Reduktionsmittellösung ist generell eine wesentliche Bestimmungsgröße für das zu dosierende Volumen der Reduktionsmittellösung, da die Konzentration ein Maß für die tatsächlich gelöste Menge an Reduktionsmittel ist.

Da die Konzentration Schwankungen unterworfen sein kann, ist es zweckmäßig, zusätzlich zu der Dichte auch die Konzentration zu bestimmen oder zu kontrollieren. Die Schwankungen in der Konzentration werden beispielsweise durch Verdunstungseffekte oder beim Nachtanken aufgrund herstellungsbedingter Unterschiede bei verschiedenen Reduktionsmittellösungen hervorgerufen. Die Konzentration wird beispielsweise durch ein Meßglied überwacht oder wird alternativ oder zusätzlich durch aktive Kontrolle auf einen vorgebbaren Wert eingestellt. Zur aktiven Kontrolle wird die Reduktionsmittellösung beispielsweise auf eine vorgebbare Temperatur thermostatisiert. Sofern die Reduktionsmittellösung bei der vorgegebenen Temperatur als gesättigte Lösung vorliegt, stellt sich eine fest definierte Gleichgewichtskonzentration entsprechend dem Phasendiagramm zwischen Reduktionsmittel und Lösungsmittel ein. Mit einer entsprechenden Thermostatisierung oder Temperierung der Reduktionsmittellösung wird daher in besonders vorteilhafter Weise sowohl ihre Konzentration als auch ihre Dichte festgelegt, so daß das zu dosierende Volumen sehr genau bestimmt werden kann.

Die auf die Vorrichtung bezogene Aufgabe wird gemäß der Erfindung gelöst durch eine Vorrichtung zur katalytischen Reduzierung von Stickoxiden im Abgas einer Verbrennungsanlage, insbesondere im Abgas eines mit Luftüberschuß betriebenen Verbrennungsmotors, mit
- einer an die Verbrennungsanlage angeschlossenen Abgasleitung,
- einem Katalysator, der in der Abgasleitung angeordnet ist,
- einem Vorratsbehälter für eine Reduktionsmittellösung,
- einer mit dem Vorratsbehälter und der Abgasleitung verbundenen Dosiereinrichtung zur Dosierung der Reduktionsmittellösung in das Abgas und
- mit einem mit der Dosiereinrichtung verbundenen Kontrollsystem, welches zur bedarfsabhängigen Dosierung des Volumens der Reduktionsmittellösung unter Berücksichtigung deren Dichte ausgebildet ist, wobei
- das Kontrollsystem eine Temperiereinrichtung umfaßt, mit der eine definierte Temperatur der Reduktionsmittellösung einstellbar ist.

Das Kontrollsystem ist dabei derart ausgebildet, daß es zur Kontrolle der Dichte der Reduktionsmittellösung geeignet ist. Der Begriff Kontrolle umfaßt hierbei sowohl das passive Überwachen oder Messen als auch das aktive Steuern oder Festlegen der Dichte der Reduktionsmittellösung.

Zur Kontrolle im Sinn von Überwachen umfaßt das Kontrollsystem vorteilhafterweise einen Temperatursensor, mit dem die Temperatur der Reduktionsmittellösung meßbar ist.

Weitere vorteilhafte Ausgestaltungen der Vorrichtung sind den auf die Vorrichtung bezogenen Unteransprüchen zu entnehmen. Die im Hinblick auf das Verfahren dargelegten Vorteile gelten sinngemäß auch für die Vorrichtung.

Ausführungsbeispiele der Erfindung werden im folgenden anhand der Zeichnung näher erläutert. Es zeigen:
- FIG 1: eine schematische Ansicht einer Abgasreinigungsanlage, bei der die Dichte der Reduktionsmittellösung unmittelbar vor einer Dosiereinrichtung kontrolliert wird und
- FIG 2: ebenfalls eine Abgasreinigungsanlage in einer schematischen Ansicht, bei der die Dichte in einem Vorratsbehälter kontrolliert wird.

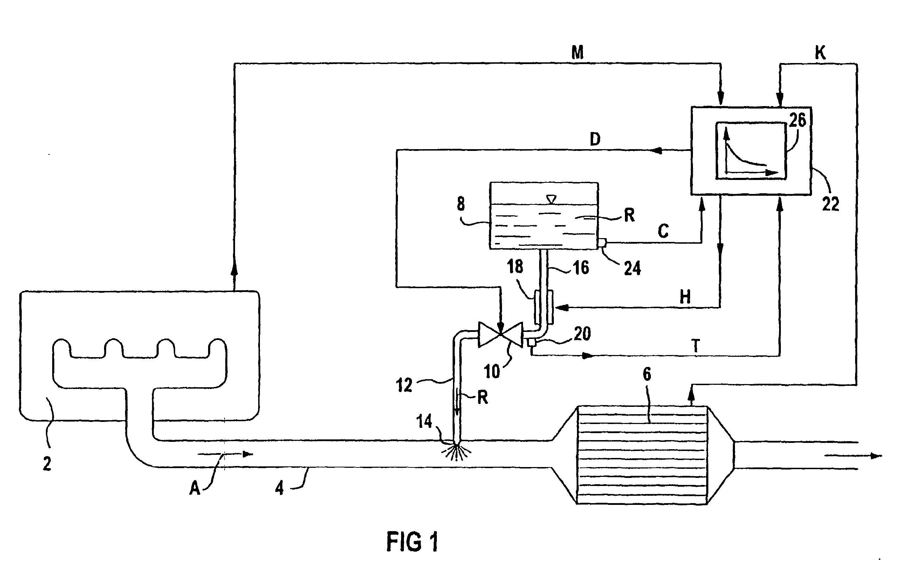

Gemäß der FIG 1 ist die Abgasreinigungsanlage mit einer Verbrennungsanlage 2 verbunden und umfaßt eine daran angeschlossene Abgasleitung 4 für bei der Verbrennung von fossilem besondere einen DeNOx-Katalysator. Die Verbrennungsanlage 2 ist insbesondere ein mit Luftüberschuß betriebener Verbrennungsmotor, beispielsweise ein Dieselmotor.

In das Abgas A wird vor dessen Eintritt in den Katalysator 6 eine Reduktionsmittellösung R aus einem Vorratsbehälter 8 mittels einer Dosiereinrichtung 10 eindosiert. Die Dosiereinrichtung 10 ist beispielsweise ein Ventil, mit dem das in das Abgas A zudosierte Volumen der Reduktionsmittellösung R gesteuert wird. Die Reduktionsmittellösung R wird von der Dosiereinrichtung 10 über eine an die Abgasleitung 4 angeschlossene Dosierleitung 12 und eine am Ende der Dosierleitung 12 angeordnete Düse 14 in das Abgas A eingespritzt.

Als Reduktionsmittellösung R wird bevorzugt eine wäßrige Harnstofflösung verwendet, aus der nach der Einbringung in das heiße Abgas A Ammoniak als Reduktionsmittel freigesetzt wird. Das Ammoniak gelangt mit dem im Abgas A befindlichen Stickoxiden in den Katalysator A und reduziert an der katalytisch aktiven Fläche die Stickoxide im wesentlichen zu Stickstoff und Wasser.

Die Reduktionsmittellösung R wird über eine Zuleitung 16 der Dosiereinrichtung 10 aus dem Vorratsbehälter 8 zugeführt. An der Zuleitung 16 ist unmittelbar vor der Dosiereinrichtung 10 eine Temperiereinrichtung 18 sowie ein Temperatursensor 20 angeordnet. Die Temperiereinrichtung 18 ist beispielsweise eine die Zuleitung 16 umfassende Heizmanschette, mit der die Temperatur der Reduktionsmittellösung R auf eine definierte Temperatur gebracht wird. Die Temperiereinrichtung 18 kann alternativ auch in der Zuleitung 16 angeordnet sein, so daß ein intensiver Kontakt zwischen Temperiereinrichtung 18 und Reduktionsmittellösung R hergestellt ist. Die Temperiereinrichtung 18 ist bevorzugt derart ausgebildet, daß die Reduktionsmittellösung R an dem der Dosiereinrichtung 10 zugewandten Ende der Temperiereinrichtung die gewünschte Temperatur aufweist und von Temperaturschwankungen in der Umgebung der Temperiereinrichtung 18 unbeeinflußt bleibt. Hierzu ist die Temperiereinrichtung 18 beispielsweise als langgestreckter Zylinder um die Zuleitung 16 ausgeführt. Die Temperiereinrichtung 18 ist bevorzugt eine elektrische Heizung, und insbesondere ein NTC-Heizelement.

Mit der Temperiereinrichtung 18 wird eine Temperatur der Reduktionsmittellösung R eingestellt, die beispielsweise einige Grad bis einige 10 Grad über der Umgebungstemperatur liegt. Mit der Temperiereinrichtung 18 kann die Reduktionsmittellösung alternativ auch gekühlt werden. Die einzustellende Temperatur wird dabei derart gewählt, daß eine möglichst geringe Heizleistung oder Kühlleistung und damit ein möglichst geringer Energieverbrauch erforderlich ist. Die einzustellende Temperatur kann hierzu in Abhängigkeit der Umgebungstemperatur gewählt werden, die beispielsweise über einen nicht näher dargestellten Temperaturfühler ermittelt wird.

Der Temperiereinrichtung 18 nachfolgend ist der Temperatursensor 20 vor der Dosiereinrichtung 10 angeordnet. Mit dem Temperatursensor 20 wird die Temperatur der Reduktionsmittellösung R unmittelbar vor dem Eintritt in die Dosiereinrichtung 10 ermittelt. Als Temperatursensor 20 werden gebräuchliche Temperatursensoren verwendet, die die Temperatur möglichst schnell erfassen.

Wird als Temperiereinrichtung 18 ein NTC-Heizelement verwendet, so kann dies zugleich als Temperatursensor herangezogen werden. Bevorzugt wird das NTC-Heizelement in die Zuleitung 16 eingebaut, so daß ein intensiver Kontakt zwischen dem NTC-Heizelement und der Reduktionsmittellösung R besteht. Somit kann mit dem NTC-Heizelement die Reduktionsmittellösung R temperiert und ihre Temperatur gleichzeitig über eine Widerstandsmessung bestimmt werden.

Die zusätzliche Anordnung des Temperatursensors 20 zu der Temperiereinrichtung 18 ist im Hinblick auf eine hohe Dosiergenauigkeit besonders vorteilhaft. Temperiereinrichtung 18 und Temperatursensor 20 können in Kombination oder einzeln verwendet werden, um die Dichte der Reduktionsmittellösung zu kontrollieren und die Dichte bei der Bestimmung des zu dosierenden Volumens der Reduktionsmittellösung R heranzuziehen.

Zur Steuerung des Volumens der Reduktionsmittellösung R, das pro Zeiteinheit in das Abgas A eindosiert wird, ist ein Kontrollsystem vorgesehen, daß insbesondere eine Kontrolleinheit 22, die Temperiereinrichtung 18, den Temperatursensor 20, die Dosiereinrichtung 10 sowie ein Meßglied 24 zur Bestimmung der Konzentration der Reduktionsmittellösung R umfaßt. Da bei instationär betriebenen Verbrennungsmotoren pro Zeiteinheit sehr unterschiedliche Mengen an Stickoxiden im Abgas A auftreten, muß sich die zudosierte Menge an Reduktionsmittel dem jeweiligen Bedarf anpassen. Der Bedarf an Reduktionsmittel wird dabei in erster Linie aus Kenndaten M des Verbrennungsmotors 2 bestimmt. Neben den Kenndaten M des Verbrennungsmotors 2 werden optional als weitere wichtige Größen Kenndaten K des Katalysators 6 an die Kontrolleinheit 22 übermittelt. Aus diesen beiden Sätzen von Kenndaten bzw. Parametern wird der aktuelle Bedarf an Reduktionsmittel abgeleitet. Die Kontrolleinheit 22 umfaßt hierzu beispielsweise ein Speicherelement 26, in dem ein Kennfeld für die unterschiedlichen Parametersätze abgelegt ist, und aus dem die aktuell benötigte Reduktionsmittelmenge bestimmt wird.

Ausgehend vom Bedarf an Reduktionsmittel wird das Volumen der Reduktionsmittellösung R bestimmt, das über die Dosiereinrichtung 10 zudosiert wird. Hierzu gehen insbesondere die Konzentration C sowie die Dichte der Reduktionsmittellösung R ein. Die Konzentration C ist entweder beim Befüllen festgelegt, oder sie wird alternativ oder zusätzlich durch das Meßglied 24 ermittelt oder durch die Temperierung der Reduktionsmittellösung R definiert, sofern diese gesättigt ist.

Die Dichte der Reduktionsmittellösung R wird mit Hilfe der Kontrolleinheit 22 kontrolliert. Dabei umfaßt die Kontrolle zum einen die Messung der Temperatur der Reduktionsmittellösung R mit Hilfe des Temperatursensors 20 sowie zum anderen die Einstellung der Temperatur der Reduktionsmittellösung R mit Hilfe der Temperiereinrichtung 18. Zur Berücksichtigung der Dichte wird vom Temperatursensor 20 ein Signal T an die Kontrolleinheit und von der Kontrolleinheit 22 ein Signal H an die Temperiereinrichtung 18 übermittelt. Aufgrund des Signals H wird die Temperiereinrichtung 18 auf eine bestimmte Temperatur eingestellt. Ausgehend von der Konzentration und der Dichte der Reduktionsmittellösung R bestimmt die Kontrolleinheit 22 das zu dosierende Volumen. Hierzu ist in dem Speicherelement 26 beispielsweise eine Kennlinie oder ein Kennlinienfeld gespeichert, das die Abhängigkeit zwischen Temperatur und Dichte wiedergibt. Das ermittelte und pro Zeiteinheit zu dosierende Volumen wird als Signal D an die Dosiereinrichtung 10 übermittelt.

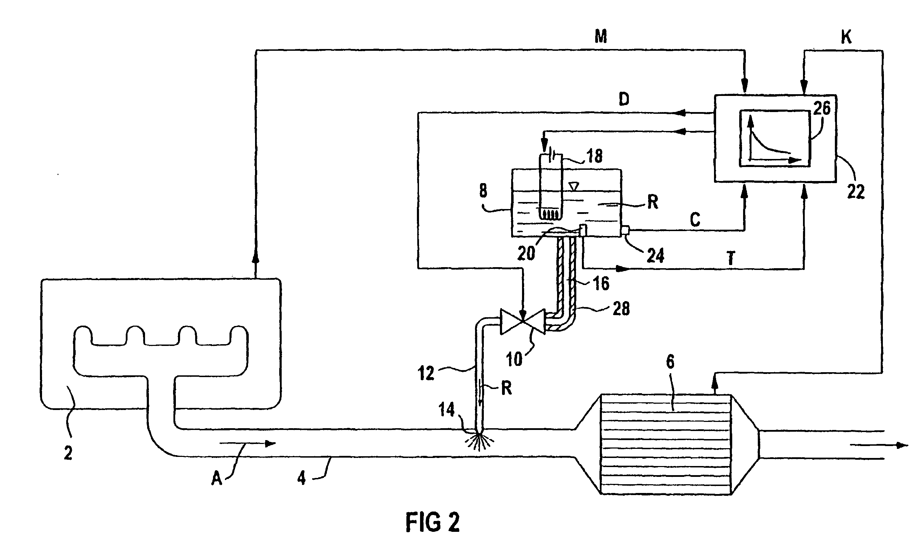

Abweichend zur FIG 1 sind gemäß FIG 2 die Temperiereinrichtung 18 sowie der Temperatursensor 20 jeweils im oder am Vorratsbehälter 8 angeordnet. Bei dieser alternativen Ausführungsform können über die Zuleitung 16 zu der Dosiereinrichtung 10 Wärmeverluste auftreten. Die an der Dosiereinrichtung 10 vorliegende Temperatur der Reduktionsmittellösung R kann daher von der im Vorratsbehälter 8 gemessenen oder eingestellten Temperatur abweichen, so daß bei der Ermittlung der Dichte der Reduktionsmittellösung R eine Korrektur erforderlich ist. Um die Wärmeverluste über die Zuleitung 16 möglichst gering zu halten, ist diese vorzugsweise mit einer Isolierung 28 umgeben.

Bei dem Verfahren und bei der Vorrichtung zur katalytischen Reduzierung von Stickoxiden im Abgas der Verbrennungsanlage 2 ist der wesentliche Gesichtspunkt die Heranziehung der Dichte der Reduktionsmittellösung R zur Ermittlung des zu dosierenden Volumens. Die Dichte wird dabei alternativ oder gleichzeitig passiv überwacht sowie aktiv beeinflußt, indem die Temperatur der Reduktionsmittellösung R ermittelt bzw. indem die Temperatur der Reduktionsmittellösung eingestellt wird. Die Dichte der Reduktionsmittellösung wird daher in zweifacher Hinsicht kontrolliert, um eine möglichst hohe Dosiergenauigkeit zu erreichen und einen Schlupf an Reduktionsmittel zu verhindern.

## Patentansprüche

1. Verfahren zur katalytischen Reduzierung von Stickoxiden im Abgas (A) einer Verbrennungsanlage (2), insbesondere im Abgas (A) eines mit Luftüberschuß betriebenen Verbrennungsmotors, bei dem
- das Abgas (A) einen Katalysator (6) durchströmt,
- dem Abgas (A) vor Durchströmen des Katalysators (6) eine Reduktionsmittellösung (R) zudosiert und
- die pro Zeiteinheit zu dosierende Menge des gelösten Reduktionsmittels bedarfsabhängig bestimmt wird, wobei
- die Reduktionsmittellösung (R) temperiert und damit ihre Dichte zur Bestimmung des pro Zeiteinheit zu dosierenden Volumens der Reduktionsmittellösung (R) eingestellt wird.

2. Verfahren nach Anspruch 1, bei dem die Temperatur der Reduktionsmittellösung (R) gemessen, daraus ihre Dichte abgeleitet und in Abhängigkeit der Dichte das zu dosierende Volumen der Reduktionsmittellösung (R) gesteuert wird.

3. Verfahren nach einem der vorhergehenden Ansprüche, bei dem das zu dosierende Volumen aus einer Kennlinie bestimmt wird, die die Abhängigkeit zwischen Temperatur und Dichte wiedergibt.

4. Verfahren nach einem der vorhergehenden Ansprüche, bei dem die Temperierung mittels einer Heizung, insbesondere mittels eines sogenannten NTC-Heizelements, durchgeführt wird.

5. Verfahren nach einem der vorhergehenden Ansprüche, bei dem die Konzentration der Reduktionsmittellösung (R) zur Bestimmung des zu dosierenden Volumens herangezogen wird.

6. Vorrichtung zur katalytischen Reduzierung von Stickoxiden im Abgas (A) einer Verbrennungsanlage (2), insbesondere im Abgas eines mit Luftüberschuß betriebenen Verbrennungsmotors, mit
- einer an die Verbrennungsanlage (2) angeschlossenen Abgasleitung (4) für das Abgas (A),
- einem Katalysator (6), der in der Abgasleitung (4) angeordnet ist,
- einem Vorratsbehälter (8) für eine Reduktionsmittellösung (R),
- einer mit dem Vorratsbehälter (8) und der Abgasleitung (4) verbundenen Dosiereinrichtung (10) zur Dosierung der Reduktionsmittellösung (R) in das Abgas (A),
- mit einem mit der Dosiereinrichtung (10) verbundenen Kontrollsystem (18 bis 26), welches zur bedarfsabhängigen Dosierung des Volumens der Reduktionsmittellösung (R) unter Berücksichtigung deren Dichte ausgebildet ist, wobei
- das Kontrollsystem (18 bis 26) eine Temperiereinrichtung (18) umfaßt, mit der eine definierte Temperatur der Reduktionsmittellösung (R) einstellbar ist.

7. Vorrichtung nach Anspruch 6, bei der das Kontrollsystem (18 bis 26) einen Temperatursensor (20) umfaßt, mit dem die Temperatur der Reduktionsmittellösung (R) meßbar ist.

8. Vorrichtung nach Anspruch 6 oder 7, bei der das Kontrollsystem (18 bis 26) ein Speicherelement (26) umfaßt, in dem eine Kennlinie gespeichert ist, die die Abhängigkeit zwischen Temperatur und Dichte wiedergibt.

9. Vorrichtung nach einem der Ansprüche 6 bis 8, bei der die Temperiereinrichtung (18) eine Heizung, insbesondere ein sogenanntes NTC-Heizelement, aufweist.

## Claims

1. Method for the catalytic reduction of nitrogen oxides contained in the off-gas (A) from a combustion system (2), in particular in the exhaust gas (A) from an internal combustion engine operated with excess air, in which method
- the off-gas (A) flows through a catalytic converter (6),
- a reducing agent solution (R) is metered into the off-gas (A) before it flows through the catalytic converter (6), and
- the amount of dissolved reducing agent which is to be metered per unit time is determined according to demand,
- the temperature of the reducing agent solution (R) being controlled and therefore its density being set to determine the volume of reducing agent solution (R) which is to be metered per unit time.

2. Method according to Claim 1, in which the temperature of the reducing agent solution (R) is measured, and its density is derived from this measurement, and the volume of reducing agent solution (R) to be metered is controlled as a function of the density.

3. Method according to one of the preceding claims, in which the volume to be metered is determined from a characteristic curve which shows the relationship between temperature and density.

4. Method according to one of the preceding claims, in which the temperature is controlled by means of a heating arrangement, in particular by means of a so-called NTC heater element.

5. Method according to one of the preceding claims, in which the concentration of the reducing agent solution (R) is used to determine the volume to be metered.

6. Device for the catalytic reduction of nitrogen oxides contained in the off-gas (A) from a combustion system (2), in particular in the exhaust gas from an internal combustion engine operated with excess air, having
- an off-gas line (4), which is connected to the combustion system (2), for the off-gas (A),
- a catalytic converter (6), which is arranged in the off-gas line (4),
- a reservoir (8) for a reducing agent solution (R),
- a metering device (10), which is connected to the reservoir (8) and the off-gas line (4), for metering the reducing agent solution (R) into the off-gas (A),
- having a regulating system (18 to 26) which is connected to the metering device (10) and is designed to meter the volume of reducing agent solution (R) according to demand, taking into account the density of this solution,
- the regulating system (18 to 26) comprising a temperature-control device (18) which can be used to set a defined temperature of the reducing agent solution (R).

7. Device according to Claim 6, in which the regulating system (18 to 26) comprises a temperature sensor (20) which can be used to measure the temperature of the reducing agent solution (R).

8. Device according to Claim 6 or 7, in which the regulating system (18 to 26) comprises a memory element (26) in which a characteristic curve showing the relationship between temperature and density is stored.

9. Device according to one of Claims 6 to 8, in which the temperature-control device (18) has a heating arrangement, in particular a so-called NTC heater element.

## Revendications

1. Procédé de réduction catalytique d'oxydes d'azote dans les gaz d'échappement (A) d'un système (2) à combustion interne, notamment dans les gaz d'échappement (A) d'un moteur à combustion interne fonctionnant avec un excès d'air, dans lequel
- les gaz d'échappement (A) passent dans un pot catalytique (6),
- il est ajouté de manière dosée aux gaz d'échappement (A), avant qu'ils passent dans le pot catalytique (6), une solution ( R) d'agent réducteur, et
- la quantité d'agent réducteur dissoute ajoutée de manière dosée par unité de temps est déterminée en fonction des besoins,
- la solution ( R) d'agent réducteur étant mise en température et ainsi sa masse volumique étant réglée pour la détermination du volume de la solution d'agent ( R) d'agent réducteur à ajouter d'une manière dosée par unité de temps.

2. Procédé suivant la revendication 1, dans lequel on mesure la température de la solution ( R) d'agent réducteur, on en déduit sa masse volumique et en fonction de la masse volumique, on règle le volume de la solution ( R) d'agent réducteur à ajouter de manière dosée.

3. Procédé suivant l'une des revendications précédentes, dans lequel on détermine le volume à ajouter de manière dosée par une courbe caractéristique qui donne la dépendance entre la température et la masse volumique.

4. Procédé suivant l'une des revendications précédentes, dans lequel on effectue la mise en température au moyen d'un dispositif de chauffage, notamment au moyen de ce que l'on appelle un élément de chauffage à coefficient négatif de température.

5. Procédé suivant l'une des revendications précédentes, dans lequel on tire partie de la concentration de la solution ( R) d'agent réducteur pour la détermination du volume à ajouter de manière dosée.

6. Dispositif de réduction catalytique d'oxydes d'azote dans les gaz d'échappement (A) d'un système (2) à combustion interne, notamment dans les gaz d'échappement d'un moteur à combustion interne fonctionnant avec un excès d'air, comprenant :
- un conduit (4) pour les gaz d'échappement (A) raccordé au système (2) à combustion interne,
- un pot catalytique (6) qui est monté dans le conduit (4) pour les gaz d'échappement,
- un réservoir (8) d'une solution ( R) d'agent réducteur,
- un dispositif (10) d'addition dosée communiquant avec le réservoir (8) et avec le conduit (4) pour les gaz d'échappement et destiné à l'addition dosée de la solution ( R) d'agent réducteur dans les gaz d'échappement (A),
- un système (18 à 26) de contrôle qui est relié au dispositif (10) d'addition dosée et qui, pour l'addition dosée en fonction des besoins du volume de la solution ( R) d'agent réducteur, est constitué en tenant compte de la masse volumique de celle-ci,
- le système (18 à 26) de contrôle comprenant un dispositif (18) de mise en température, par lequel une température définie de la solution ( R) d'agent réducteur peut être établie.

7. Dispositif suivant la revendication 6, dans lequel le système (18 à 26) de contrôle comprend une sonde (20) de température, par laquelle la température de la solution ( R) d'agent réducteur peut être mesurée.

8. Dispositif suivant la revendication 6 ou 7, dans lequel le système (18 à 26) de contrôle comprend un élément (26) de mémoire, dans lequel est mémorisée une courbe caractéristique qui reproduit la dépendance entre la température et la masse volumique.

9. Dispositif suivant l'une des revendications 6 à 8, dans lequel le dispositif (18) de mise en température comporte un chauffage, notamment un élément chauffant (10) à coefficient négatif de température.
